# EUROPÄISCHE PATENTSCHRIFT

(11) **EP 2 406 528 B1**
(45) Veröffentlichungstag und Bekanntmachung des Hinweises auf die Patenterteilung: **14.11.2012**
(21) Anmeldenummer: 10709149.8
(22) Anmeldetag: 08.03.2010
(51) Int. Cl.: F16K 1/06, F16K 1/36, F16K 39/02

(54) **REGELVENTILELEMENT**
CONTROL VALVE ELEMENT
ELÉMENT DE SOUPAPE DE RÉGULATION

(30) Priorität: 09.03.2009 AT 3792009
(43) Veröffentlichungstag der Anmeldung: 18.01.2012
(73) Patentinhaber: Herz Armaturen Ges.m.b.H., 1230 Wien (AT)
(72) Erfinder: SCHUSTER-OFNER-ABSCHLAG, Hannes, 2442 Unterwaltersdorf (AT)
(74) Vertreter: Wildhack & Jellinek
(86) Internationale Anmeldenummer: PCT/AT2010/000069
(87) Internationale Veröffentlichungsnummer: WO 2010/102317

(56) Entgegenhaltungen:
- DE-B3-102006 029 823
- GB-A- 251 392
- GB-A- 380 734
- GB-A- 2 033 549
- US-A- 3 756 558
- US-A1- 2004 256 586

## Beschreibung

Die Erfindung betrifft ein druckentlastetes Regelventilelement gemäß dem Oberbegriff des Anspruchs 1.
Derartige Regelventilelemente werden im Bereich der Durchflussregelung bzw. Differenzdruckregelung in Regelventilen, insbesondere bei Heiz- bzw. Kühlsystemen in Gebäuden, eingesetzt.

Aus der GB 251392 ist ein gattungsgemäßes Ventil bekannt. Beim Gegenstand der GB 251392 erfolgt kein Anströmen der Stirnfläche des Regelelements; das Regelelement wird seitlich durch die Öffnung angeströmt, welche Öffnung dann freigegeben wird, wenn die Stirnfläche des Regelelementes vom Ventilsitz abhebt. Es erfolgt eine doppelte Einschränkung des Querschnittes für das das Regelelement durchströmende Medium und es erfolgt eine Druckaufteilung einerseits über eine der Öffnung nachfolgende Öffnung und über die in der Stirnfläche des Regelelementes befindliche bzw. von dieser Stirnfläche her durchströmte Öffnung. Es liegen von der Stellung des Ventilkörpers abhängige Druckverhältnisse an den jeweiligen Durchführungen vor, die vom Strömungsdruck und nicht vom Staudruck des Mediums beeinflusst werden. Dieses Ventil funktioniert nicht, wenn man die Durchströmung umkehren würde, weil bei Öffnung des Ventilkörpers um nur einen geringen Spalt vorab überhaupt kein Medium durch die Öffnung strömen würde und bei anschließender Öffnung der Durchströmungsöffnung das Medium bereits mit einem aufgrund des Durchströmens des Ventilspaltes verringerten Druck zur Durchströmungsöffnung gelangen würde.

Vor allem bei membrangesteuerten Regelventilen besteht häufig das Problem, dass das Regelelement abhängig von der Wasserdurchflussmenge unterschiedlichen vom durchfließenden Wasser ausgehenden Kräften ausgesetzt ist. Durchströmt das Wasser mit geringer Geschwindigkeit und hohem Druck den Ventilsitz des zu regelenden Ventils, so wird durch diesen hohen Druck das Regelelement, beispielsweise gegen den Druck einer Feder, ausgelenkt. Bei einer geringen Wasserdurchflussmenge wird das Regelelement weniger stark ausgelenkt, da der Wasserdruck und die Federkraft einander in einer anderen Position ausgleichen. Ein derartiges Verhalten des Regelelements eines Ventils ist jedoch problematisch, wenn neben den Federkräften zusätzliche Stellkräfte, beispielsweise ausgeübt durch eine Membran, auf das Regelelement bzw. ein mit diesem verbundenes Stellelement einwirken, da in diesem Fall die Stellung des Regelelements von der momentanen Wasserdurchflussmenge durch den Ventilsitz abhängig ist. Dies führt zu einem Verhalten des Regelelements derart, dass die Position des Regelelements sowohl von der vorgegebenen Stellkraft als auch von der aktuellen Wasserdurchflussmenge durch den Ventilsitz abhängig ist. Eine derartige zusätzliche Abhängigkeit ist insofern problematisch, als hierdurch das Regelverhalten undefiniert wird bzw. eine zusätzliche Störkraftgröße auf das Regelelement einwirkt.

Aufgabe der Erfindung ist es daher, ein Regelventilelement bereit zu stellen, dessen Regelelement eine Stellcharakteristik aufweist, bei der die Position des Regelelements weitestgehend unabhängig von der Wasserdurchflussmenge durch den Ventilsitz bleibt. Ferner sollten die Baugröße beschränkt und der Aufbau konstruktiv einfach sein.

In diesem Zusammenhang wurde weiters das Problem erkannt, dass der Druck des den Ventilsitz durchströmenden Wassers nicht konstant ist, sondern aufgrund der Verengung des Durchflussquerschnitts beim Durchfließen des Ventilsitzes von der Mitte des Ventilsitzes bzw. der Verschlussfläche des Regelelements zu dessen bzw. deren Außenbereich hin abnimmt. Aus diesem Grund sind die gängigen Methoden zur Druckentlastung eines Ventilregelelements für diesen Fall nicht anwendbar, da abhängig von der Wassergeschwindigkeit und auch der Position des Regelelements verschiedene Druckverhältnisse in der Mitte bzw. im Außenbereich der Stirnfläche des Regelements herrschen.

Die Erfindung hat die Aufgabe, die eingangs genannten Probleme zu lösen und ein druckentlastetes Regelventilelement zur Verfügung zu stellen, das unabhängig vom Wasserdruck bzw. der Wasserdurchflussmenge sowie seiner Stellung das selbe Regelverhalten zeigt. Die Position des Regelelements wird dabei lediglich durch eine von außen vorgegebene Stellgröße bestimmt, während die Position des Regelelements sowie die Wasserdurchflussmenge keinen Einfluss auf das Regelelement haben.

Die Erfindung löst die Aufgabe bei einem Regelventilelement gemäß dem Oberbegriff des Anspruchs 1 mit den Merkmalen des Kennzeichens des Anspruchs 1.

Bevorzugte Ausführungsformen des Regelventilelements werden in den abhängigen Unteransprüchen beschrieben.

Erfindungsgemäß besteht der Vorteil, dass aufgrund der Druckabnahme an zwei radial voneinander beabstandeten Ausmündungen von voneinander getrennten Durchführungen die unterschiedlichen Druckverhältnisse im zentralen Innenbereich und im randnahen Außenbereich der Stirnfläche des Regelelements getrennt voneinander abgegriffen und in separate, gegeneinander abgedichtete und keine unmittelbare Fluidverbindung aufweisende Kammern geführt werden.

Eine bevorzugte Ausgestaltung gemäß Anspruch 2 bietet den Vorteil, dass die Positionierung der peripheren Durchführung bzw. deren Ausmündung in den vor der Stirnfläche des Regelelements liegenden Strömungsbereich einfach festgelegt werden kann. Durch die Verwendung unterschiedlicher Endplatten können unterschiedliche Ausmündungspositionen der peripheren Durchführung festgelegt werden. Soferne mehrere periphere Durchführungen vorhanden sind, weisen diese denselben Abstand von der Achse des zylindrischen Regelkörpers auf. Vorteilhafterweise mündet die periphere Durchführung am Rand bzw. Umfang der kreisförmigen Endplatte aus.

Einen besonders einfachen Aufbau kann mit den Merkmalen des Kennzeichens des Anspruchs 3 erreicht werden.

Mit dem Kennzeichen des Anspruchs 4 wird ein einfacher Differenzdruckregler erstellt, dessen Differenzdruck sich als Differenz zwischen dem an der zentralen Durchführung anliegenden Druck sowie einem vorgegebenen Druck auf die Membran ergibt.

Eine besonders einfach herstellbare und exakt arbeitende Ausführungsform des erfindungsgemäßen Ventilelements ist durch die Merkmale des Kennzeichens des Anspruchs 5 charakterisiert.

Eine bevorzugte Ausführungsform gemäß Anspruch 6 ermöglicht bei einfachem Aufbau die einfache Vorgabe eines extern abgenommenen Drucks für die Ventilsteuerung.

Ein Ventilelement mit den Merkmalen des Kennzeichens des Anspruchs 7 bietet einen besonders einfachen Aufbau der peripheren Durchführung. Der radiale Abstand wird in Abhängigkeit von den erwarteten Antriebsparametern des Wasserdurchflusses bzw. der gewünschten Regelcharakteristik gewählt.

Ein Ventilelement mit den Merkmalen des Kennzeichens des Anspruchs 8 besitzt bei besonders platzsparenden Aufbau für weite Bereiche eine exakte gleichbleibende Regelcharakteristik.

Bei einem Ventilelement gemäß dem Merkmal des Kennzeichens des Anspruchs 9 kann die Position der Ausmündung bzw. Ausmündungen der peripheren Durchführung für viele Anwendungsbereiche optimal eingestellt werden.

Mit den Merkmalen des Kennzeichens des Anspruchs 10 wird der von der peripheren Kammer ausgehende Ausgleichsdruck bzw. die daraus resultierende Ausgleichskraft optimal eingestellt. Zudem kann die Membran kleiner gewählt werden als bei bisherigen Membranregelventilkonstruktionen.

Bevorzugte Ausführungsformen eines erfindungsgemäßen Ventilelements bzw. einer Ventilanordnung werden im folgenden anhand der Fig. näher beschrieben.
Fig. 1 zeigt eine Ausführungsform eines erfindungsgemäßen Regelventilelements.
Fig. 2 zeigt eine Ventilvorrichtung mit eingebautem Regelventilelement im geöffneten Zustand.
Fig. 3 zeigt die Endplatte des Regelventilelements.
Fig. 4 zeigt das Regelelement des Regelventilelements.

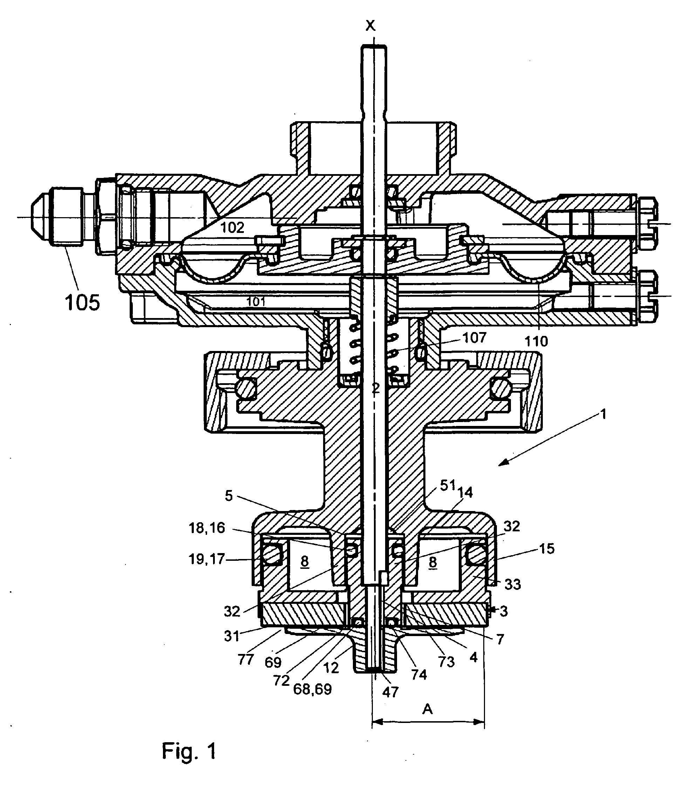

Fig. 1 zeigt eine bevorzugte erfindungsgemäße Ausgestaltung eines Regelventilelements 10 im Schnitt. Das Regelventilelement 10 umfasst ein Ventilgehäuse 1, das von einem darin verschiebbar gelagerten Stellelement 2 durchsetzt ist. Das Stellelement 2 ist hierbei zylindrisch ausgebildet und durchsetzt eine zylindrische Ausnehmung 11 des Ventilgehäuses 1. Der Radius der zylindrischen Ausnehmung 11 ist dabei etwa 1% bis 5% größer als der Radius des Stellelements, sodass das Stellelement 2 reibungsfrei gegenüber dem Ventilgehäuse 1 verschoben werden kann. Zusätzlich ist während des Betriebs des Regelventilelements 10 der Zwischenbereich zwischen dem Stellelement 2 und dem Ventilgehäuse 1 mit Wasser gefüllt, wobei dieser Zwischenbereich als Druckleitung fungiert.

An dem dem Ventilgehäuse 1 fernen Ende des Stellelements 2 ist ein kolbenförmiges bzw. zylindrisches Regelelement 3, detailliert dargestellt in Fig. 5, angeordnet. Dieses Regelelement 3 weist eine Dichtungs- bzw. Stirnfläche 31 auf, die dem Ventilgehäuse 1 abgewandt ist. Die Achse X des zylindrischen Regelelements 3 ist in dieser besonderen Ausführungsform ident mit der Achse X des zylindrisch ausgebildeten Stellelements 2.

Das Regelelement 3 weist eine durchgängige zentrale Durchführung 4 auf, die von der Stirnfläche 31 des Regelelements 3 zu dessen der Stirnfläche 31 gegenüberliegenden Rückfläche 35 axial zum Ventilgehäuse 1 hin verläuft. Diese zentrale Durchführung 4 ist vorteilhafterweise vom Stellelement 2 nur teilweise durchsetzt, sodass einerseits Bewegungen des Stellelements 2 unmittelbar an das Regelelement 3 weitergegeben werden und andererseits der Wasserdruck, an der Ausmündung 47 der zentralen Durchführung 4 auf der Stirnseite 31 herrscht, ungehindert im Bereich der gesamten zentralen Durchführung wirkt. Dies bedeutet, dass zur Druckweitergabe ein ausreichend großer Querschnitt, beispielsweise im Bereich einiger Quadratmillimeter, zur Verfügung steht, damit der Druck von der Ausmündung 47 der zentralen Durchführung 4 an der Stirnfläche 31 durch die zentrale Durchführung 4 hindurch weitergeleitet werden kann.

In der in Fig. 1 dargestellten Ausführungsform des erfindungsgemäßen Regelventilelements 10 weist das Ventilgehäuse 1 zwei konzentrische hohlzylinderförmige bzw. zylinderringförmige Ringvorsprünge 14, 15 auf, die annähernd gleiche Dicke besitzen. Der Radius des inneren Ringvorsprungs 14 ist naturgemäß kleiner als der Radius des äußeren Ringvorsprungs 15. Das Regelelement 3 weist ferner auf seiner Rückfläche zwei hohlzylindrische bzw. zylinderförmige Ringvorsprünge 32, 33 mit unterschiedlichem Radius, das heißt einen inneren Ringvorsprung 32 des Regelelements 3 sowie einen äußeren Ringvorsprung 33 des Regelelements 3, auf. Die äußeren Mantelbereiche des inneren bzw. äußeren Ringvorsprungs 14, 15 des Ventilgehäuses 1 sowie die inneren Mantelbereiche des inneren bzw. äußeren Ringvorsprungs 32, 33 des Regelelements 3 müssen dabei nicht zwingend zylindrisch ausgebildet sein sondern können, wie beispielsweise beim Außenbereich des inneren Ringvorsprungs 14 des Ventilgehäuses 1 dargestellt, eine leicht konische Form aufweisen.

Der Innenradius des inneren Ringvorsprungs 14 des Gehäuses 1 entspricht dabei im wesentlichen dem Außenradius 32 des inneren Ringvorsprungs des Regelelements 3, wobei der Außenradius des inneren Ringvorsprungs 32 des Regelelements 3 etwa 0,15mm-0,2mm kleiner ist als der Innenradius des inneren Ringvorsprungs des Gehäuses 1.

Auf dieselbe Weise stehen die Abmessungen der äußeren Ringvorsprünge 15, 33 zueinander in Relation: Der Innenradius des äußeren Ringvorsprungs 15 des Gehäuses 1 entspricht dabei im wesentlichen dem Außenradius des äußeren Ringvorsprungs 33 des Regelelements 3, wobei der Außenradius des äußeren Ringvorsprungs 33 des Regelelements 3 etwa 0,15mm-0,2mm kleiner ist als der Innenradius des äußeren Ringvorsprungs 15 des Gehäuses 1.

Der innere Ringvorsprung 14 des Ventilgehäuses 1 umgibt somit den inneren Ringvorsprung 32 des Regelelements 3. Der äußere Ringvorsprung 15 des Ventilgehäuses 1 umgibt somit den äußeren Ringvorsprung 33 des Regelelements 3. In diesem Ausführungsbeispiel weisen der innere und der äußere Ringvorsprung 14, 15 des Ventilgehäuses 1 an ihrem äußeren Mantelbereich ringförmige Nuten 16, 17 auf, in die Dichtungsringe 18, 19 eingebracht sind. Wird bei einer Bewegung des Stellelements 2 das Regelelement 3 gegenüber dem Ventilgehäuse 2 verschoben bzw. aktuiert, gleiten die Dichtungsringe 18, 19 an den inneren Umfangsbereichen des inneren bzw. äußeren Ringvorsprungs 14, 15 entlang. Die zwei voneinander getrennten Kammern 5, 8, nämlich eine zentrale Kammer 5 im Innenbereich des inneren Ringvorsprungs 14 des Ventilgehäuses 1 und eine periphere Kammer 8 im Bereich zwischen dem inneren Ringvorsprung 14 des Ventilgehäuses 1 und dem äußeren Ringvorsprung 15 des Ventilgehäuses 1 werden entsprechend in ihrem Volumen verändert.

Die zentrale Kammer 5 wird vom Ventilgehäuse 1 sowie vom inneren Ringvorsprung 32 des Regelelements 3 begrenzt. Die zentralen Durchführung 4 mündet in die zentrale Kammer 5 ein. In diesem Ausführungsbeispiel weist das Ventilgehäuse 1 auf der dem Regelelement 3 zugewandten Seite im Innenbereich des inneren Ringvorsprungs 32 eine Ausnehmung 51 auf, die den Austrittsbereich des zentral und axial gelegenen Stellelements 2 umgibt. Diese Ausnehmung 51 setzt sich etwa bis zur Hälfte, der Oberfläche des Ventilgehäuses 1 innerhalb des inneren Ringvorsprungs 14 fort. Außerhalb davon und innerhalb des inneren Ringvorsprungs 14 verläuft die Oberfläche des Ventilgehäuses 1 annähernd parallel zur Stirnfläche 31 des Regelelements 3 bzw. normal zur Achse X des Stellelements 2. Diese Ausnehmung 51 ist Teil der zentralen Kammer 5.

Die periphere Kammer 8 ist zwischen dem inneren und dem äußeren Ringvorsprung 14, 15 des Ventilgehäuses 1 ausgebildet und wird vom Regelelement 3 begrenzt. Die periphere Kammer 8 weist eine periphere Durchführung 7 auf, die von der peripheren Kammer 8 zur Stirnfläche 31 des Regelelements 3 führt und im Abstand A von der Achse X des Regelelements 3 beabstandet ausmündet.

Wird das Stellelement 2 gegenüber dem Ventilgehäuse 1 verschoben und dabei das Regelelement 3 aus dem Ventilgehäuse 1 herausgeführt, vergrößern sich die zentrale Kammer 5 und die periphere Kammer 8.

Der an der Ausmündung 47 der zentralen Durchführung 4 anliegende Druck wird in das Innere der zentralen Kammer 5 geführt und liegt auf Grund der annähernd statischen Druckverhältnisse an jedem Punkt, insbesondere an jedem Wandpunkt der Wandfläche der zentralen Kammer 5 an. Die auf das Regelelement 3 wirkenden Kraft ist sowohl vom Druck als auch von den druckwirksamen Flächen abhängig. Im vorliegenden Ausführungsbeispiel entspricht die druckwirksame Fläche der zentralen Kammer 5 der Projektion der dem Ventilgehäuse 1 zugewandten Fläche des inneren Ringvorsprungs 32 des Regelelements 3 auf die Stirnfläche 31 des Regelelements 3. Liegen die dem Ventilgehäuse 1 zugewandte Fläche des inneren Ringvorsprungs des Regelelements 3 und die Stirnfläche 31 des Regelelements 3 parallel, ist die druckwirksame Fläche gleich der dem Ventilgehäuse 1 zugewandte Fläche des inneren Ringvorsprungs 32 des Regelelements 3.

Analog ergibt sich die Kraft, die durch den Druck in der peripheren Kammer 8 auf das Regelelement 8 ausgeübt wird, wobei der Druck im Inneren der peripheren Kammer 8 dem Druck an der Ausmündung 77 der peripheren Durchführung 7 an der Stirnfläche 31 des Regelelements 3 entspricht. Die druckwirksame Fläche entspricht etwa der Fläche eines Kreisrings mit einem Innendurchmesser, der dem äußeren Durchmesser des inneren Ringvorsprungs 14 des Ventilgehäuses 1 entspricht, und einem Außendurchmesser, der dem inneren Durchmesser des äußeren Ringvorsprungs 33 des Regelelements 3 entspricht.

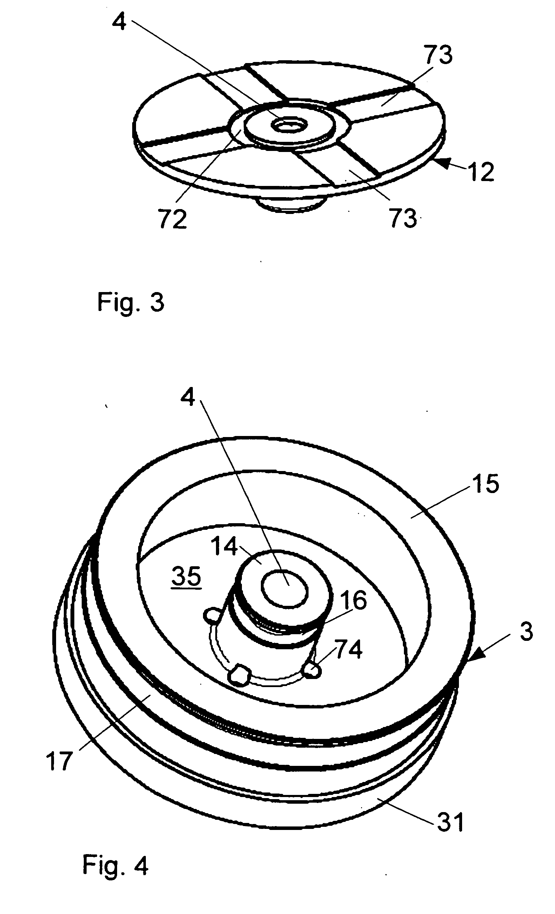

Fig. 1 zeigt weiters eine an das Regelelement 3 anschließende Endplatte 12; eine dreidimensionale Ansicht der Endplatte 12 kann Fig. 3 entnommen werden. Wie aus den Fig. 1 und 4 ersichtlich, weist das Regelelement 3 eine Anzahl von durchgängigen zylindrischen Kanälen 71 auf, die von der Stirnfläche 31 zur Rückfläche 35 des Regelelements 3 führen. Die zylindrischen Kanäle 71 sind vorteilhafterweise in gleichen Abständen von Achse X des Regelelements 3 sowie in gleichen azimutalen Abständen zueinander angeordnet und verlaufen parallel zur Achse X. In Fig. 1 sind diese Kanäle 71 im Schnitt dargestellt. Im vorliegenden Ausführungsbeispiel ist ein Teil der peripheren Durchführung 7 von der peripheren Kammer 8 zur Stirnfläche 31 des Regelelements 3 durch die zylindrischen Kanäle 71 des Regelelements 3 gebildet. Die Endplatte 12, die an das Regelelement 3 anschließt, weist an der der Stirnfläche 31 des Regelelements 3 zugewandten Seite eine kreisförmige Ausnehmung 72 auf, wobei der Mittelpunkt des Kreises auf der Achse X des zylindrischen Regelelements 3 liegt und der Radius des Kreises dem Abstand der Ausnehmungen 71 von der Achse X des zylindrischen Regelelements 3 entspricht. Die Breite dieser Ausnehmung 72 entspricht etwa dem Durchmesser der Ausnehmungen 71, gegebenenfalls kann die Breite das Ausnehmung 72 auch größer gewählt werden. Die Endplatte 12 weist eine Anzahl von radial nach außen gerichteten und an die kreisförmige Ausnehmung 72 anschließenden weiteren Ausnehmungen 73 auf, die bis zum Umfang der Endplatte 12 führen. Die Tiefe und Breite der Ausnehmung 72 bzw. der weiteren Ausnehmungen 73 kann im Bereich von einigen 100µm gewählt werden. Die Endplatte 12 schließt unmittelbar an die Stirnfläche des Regelelements 3 an. Der Durchmesser der Ausnehmungen 71, die Breite der Ausnehmung 72 sowie die Breite der weiteren Ausnehmungen 73 liegt im Bereich von 500µm bis 2mm. Der Querschnitt der Ausnehmungen 71, die Breite der Ausnehmung 72 sowie die Breite der weiteren Ausnehmungen 73 liegt im Bereich von 0,2mm² bis 2mm².

Die Endplatte 12 weist ferner eine die zentrale Durchführung 4 fortsetzende Durchführung 41 auf, wobei diese fortsetzende Durchführung 41 an der der Stirnfläche 31 abgewandten Seite der Endplatte 12 im Bereich der Achse X des Regelelements 3 ausmündet. Die fortsetzende Durchführung 41 ist gegenüber der ringförmigen Ausnehmung 72 abgedichtet, wobei das Regelelement 3 auf seiner Stirnfläche 31 eine Ringnut 69 aufweist, in die eine Ringdichtung 68 eingesetzt ist. Die Position bzw. der Radius der Ringdichtung 68 bzw. der Ringnut 69 ist so gewählt, dass eine die Ausmündung 47 der zentralen Durchführung 4, nicht jedoch die stirnseitigen Ausmündungen 77 der Ausnehmung 71 von der Ringdichtung 68 umschlossen werden.

Im folgenden wird der Begriff der durckwirksamen Fläche näher erläutert. Da Flächen von Ventilbauteilen, die mit einem Wasserdruck beaufschlagt sind, nicht zwingend normal zur Richtung ihrer Oberfläche sondern oftmals im Winkel bzw. schief zu oder Verschlussrichtung des Ventils stehen, werden für die Bestimmung der wirksamen Kräfte, nämlich der Kräfte in Achsrichtung der Achse X bzw. in Verschlussrichtung eine effektive Fläche bestimmt, die einer Projektion der jeweiligen Fläche, beispielsweise der Membranfläche, auf eine normal zur Achse X bzw. zur Verschlussrichtung stehende Fläche ermittelt. Die Projektion einer zum Teil gekrümmt verlaufenden Fläche wird als effektive oder druckwirksame Fläche bzw. der druckwirksame Anteil einer Fläche bezeichnet. Dies ermöglicht eine einfache Berechnung der Kraftverhältnisse alleine auf Grundlage der vorliegenden Drücke der druckwirksamen Flächen. Die druckwirksame Fläche einer Membran wird beispielsweise vereinfacht als druckwirksame Membranfläche bezeichnet.

Im vorliegenden Fall hat sich die folgende Dimensionierung als vorteilhaft erwiesen: Die druckwirksame Fläche der Endplatte 12 liegt zwischen 60% und 80% der druckwirksamen Stirnfläche 31 des Regelelements 3. Da die Stirnfläche 31 des Regelelements 3 im vorliegenden Fall normal auf die Achse X steht, sind die Fläche der Stirnfläche 31 und die druckwirksame Fläche der Stirnfläche 31 identisch.

Die periphere Durchführung 4 wird durch die Ausnehmungen 71, die ringförmige Ausnehmung 72 der Endplatte 12 sowie die radialen weiteren Ausnehmungen 73 der Endplatte 12 gebildet.

In dem in Fig. 1 dargestellten Regelventilelement 10 ist über die zentrale Durchführung 4, nämlich dem Zwischenbereich zwischen dem Stellelement 2 und dem Ventilgehäuse 1, der Wasserdruck von der Endplatte 12 zur zentralen Kammer 5 geführt. Darüber hinaus führt von dem dem Regelelement 3 fernen Ende der zentralen Kammer 5 im Zwischenbereich zwischen dem Stellelement 2 und dem Ventilgehäuse 1 eine Fortsetzung der zentralen Durchführung 4 zu einer ersten Regelkammer 101. Diese Regelkammer 101 ist einerseits vom Ventilgehäuse 1 und andererseits von einer Membran 110 begrenzt. Diese Membran 110 ist, wie im vorliegenden Ausführungsbeispiel dargestellt, mit dem Stellelement 2 verbunden, wobei Auslenkungen der Membran 110 Stellbewegungen des Stellelements 2 sowie schlussendlich des Regelelements 3 zur Folge haben. Auf der anderen Seite der Membran 110 schließt eine zweite Regelkammer 102 an, die einen Druckregelanschluss 105 für einen vorgegebenen Druck bzw. Gegendruck auf die Membran 110 aufweist.

Die Fläche der Membran 110 kann auf Grund der günstigen Strömungseigenschaften des erfindungsgemäßen Regelventilelements 10 sehr klein gewählt werden, sodass die druckwirksame effektive Fläche der Stirnfläche 31 des Regelelements 3 im Bereich zwischen 25% und 50% der druckwirksame effektive Membranfläche 110 liegt.

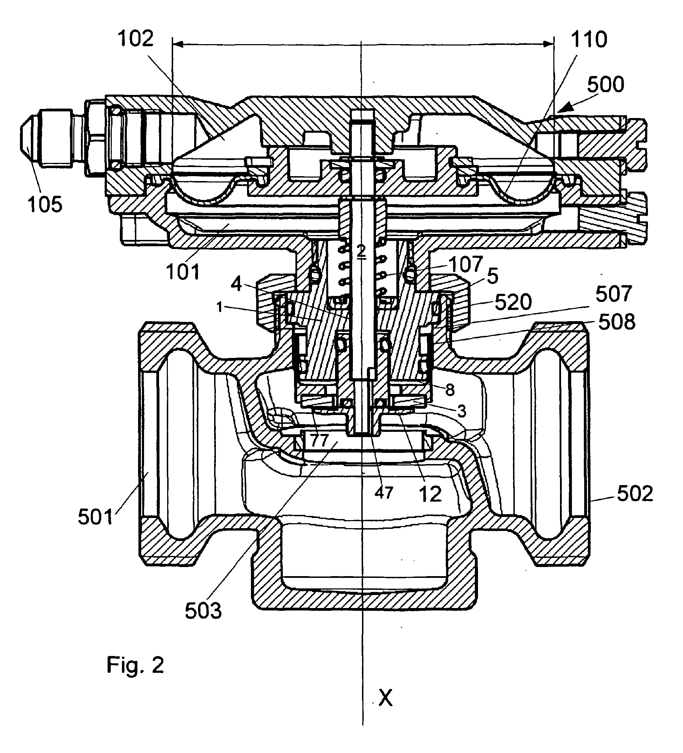

Eine Ventilvorrichtung 500, wie in Fig. 2 dargestellt, kann mittels des in Fig. 1 dargestellten Regelventilelements 10 auf einfache Weise errstellt werden. Die dargestellte Ventilvorrichtung 500 weist einen Zufluss 501 und einen Abfluss 502 auf, wobei ein Ventilsitz 503 mit einer durchströmten Fläche parallel zur Strömungsrichtung vorgesehen ist. Das Wasser fließt zunächst durch den Zufluss 501, passiert den Ventilsitz 503, wobei das Regelelement 3 im strömungsabwärts gelegenen Bereich des Ventilsitzes 503 angeordnet ist. Das Regelventilelement 10 durchsetzt eine Öffnung 507 des strömungsabwärts des Ventilsitzes 503 gelegenen Mantelbereichs des Gehäuses 510 der Ventilanorndung 500. Die Öffnung 507 weist ein Außengewinde 508 auf, wobei das Regelventilelement 10 in die Öffnung 507 eingesetzt ist. Das Regelventilelement 10 wird mit seinem Gehäuse 1 zwischen einer Überwurfmutter 520 mit Innengewinde und dem Rand der Öffnung 507 gehalten. Die Überwurfmutter 520 ist dabei gegenüber dem Außengewinde 508 verschraubt und legt somit die Position des Regelventilelements 10 gegenüber der Ventilvorrichtung 500 fest.

Das Regelelement 3 des Regelventilelements 10 verschließt den Ventilsitz 503 bzw. regelt den Durchfluss durch den Ventilsitz 503 gegen den Druck des Wassers. Das Regelelement 3 ist im Zuge seiner Regelbewegungen somit ständigen Druckschwankungen des Wasserdrucks ausgesetzt, wobei zusätzlich ein räumlich inhomogener Druck an der Stirnfläche 31 des Regelelements 3 herrscht. Im Bereich der Achse X ist der Druck wesentlich höher als in den peripheren bzw. umfangsnäheren Bereichen der Stirnfläche 31.

Die Regelung erfolgt zum einen durch die an der Membran 110 wirkenden Kräfte, die sich aus dem am Druckregelanschluss 105 anliegenden Referenzdruck sowie dem an der zentralen Durchführung 4 anliegenden Wasserdruck ergeben. Mittels einer Feder 107 wird die Membran 110 in einem voreingestellten Gleichgewicht sowie in einer durch diese Gleichgewichtslage vorgegebenen Position gehalten, wobei diese Gleichgewichtslage von der Wasserdurchflussmenge abhängig ist. Nimmt die Durchflussmenge zu, so liegt ein größeres radiales Druckgefälle über die Stirnfläche des Regelelements 3 vor, was die eingestellte Gleichgewichtslage verschiebt und tendentiell den Durchfluss reduziert.

Wird hingegen, wie erfindungsgemäß vorgesehen, Druck im peripheren Bereich der Stirnfläche 31 in der Kammer 8 auf das Regelelement 3 ausgeübt, wird die durch den Wasserstrom verursachte geringere Kraft weitestgehend durch eine geringere entgegenwirkende Kraft ausgehend von der peripheren Kammer 8 kompensiert, was die Abhängigkeit der Gleichgewichtslage von der Wasserdurchflussmenge reduziert. Somit ist die Gleichgewichtslage lediglich von der an der Membran 110 anliegenden Druckdifferenz, jedoch nicht von den Strömungsverhältnissen am Ventilsitz 503 bzw. and der Stirnfläche 31 abhängig.

Auf Grund der Nichtlinearität der Abhängigkeit von Wasserdruckabfall-Verhalten und Durchflussmenge kann für vorgegebene Wasserdurchflussmengen eine optimale Dimensionierung der peripheren Kammer 8 vorgenommen werden. Der Flächenanteil der effektiven Innenoberfläche der peripheren Kammer 8, der der Stirnfläche 31 des Regelelements 3 zugewandt ist, liegt vorteilhafterweise zwischen 85% und 115% der Ventilsitzes 503.

## Patentansprüche

1. Regelventilelement mit einem Ventilgehäuse (1), das von einem verschiebbaren Stellelement (2) durchsetzt ist, das an seinem dem Ventilgehäuse (1) fernen Ende ein zylindrisches kolbenförmiges Regelelement (3) trägt, mit dem ein Ventilsitz verschließbar ist,
wobei
- das Regelelement (3) zumindest eine zentrale, insbesondere im Bereich der Achse (X) des Regelelementes (3) verlaufende, Durchführung (4) aufweist, die zumindest teilweise vom Stellelement (2) durchsetzt ist,
- zwischen dem Ventilgehäuse (1) und dem Regelelement (3) eine das Stellelement (2) unmittelbar umgebende zentrale Kammer (5) ausgebildet ist, in die ein Ende der zentralen Durchführung (4) einmündet,
- die zentrale Kammer (5) von einem innenliegenden bzw. der zentralen Durchführung (4) nahen Teilbereich der der Stirnfläche gegenüberliegenden Rückfläche des Regelelements (3) begrenzt wird,
- zwischen dem Ventilgehäuse (1) und der Rückfläche des Regelelements (3) eine gegenüber der zentralen Kammer (5) abgedichtete bzw. dazu separierte, gegebenenfalls die zentrale Kammer (5) umgebende, periphere Kammer (8) ausgebildet ist, und
- das Regelelement (3) zumindest eine von der zentralen Durchführung (4) beabstandete periphere Durchführung (7) aufweist, die mit einem Ende in der peripheren Kammer (8) und mit ihrem anderen Ende auf der angeströmten Stirnfläche (31) des Regelelements (3) ausmündet,
**dadurch gekennzeichnet,**
- **dass** die zentrale Durchführung (4) auf der vom zu regelnden Fluid durch den Ventilsitz angeströmten Stirnfläche (31) des Regelelements (3) eine zentrale, insbesondere im Bereich der Achse (X) liegende, Ausmündung (47) aufweist,
- **dass** die Ausmündung (77) der peripheren Durchführung (7) und die Ausmündung (47) der zentralen Durchführung (4) innerhalb des mit dem Ventilsitz in Dichtungskontakt tretenden Randbereiches der angeströmten Stirnfläche (31) liegen, und
- **dass** die Ausmündung (77) der peripheren Durchführung (7) von der Ausmündung (47) der zentralen Durchführung (4) auf der angeströmten Stirnfläche (31) mit einem vorgegebenen radialen Abstand (A) beabstandet ist.

2. Regelventilelement gemäß Anspruch 1, **dadurch gekennzeichnet, dass** vor der Stirnfläche des Regelelements (3) eine Endplatte (12) liegt, die vom Stellelement (2) und/oder vom Regelelement (3) getragen ist, und dass ein Teil der peripheren Durchführung (7) von einem Kanal gebildet ist, der insbesondere von zwischen dem Regelelement (3) und der Endplatte (12) liegende Ausnehmungen (72, 73) in der Endplatte (12), gebildet ist.

3. Regelventilelement gemäß einem der vorangehenden Ansprüche, **dadurch gekennzeichnet, dass** das Ventilgehäuse (1), das Stellelement (2), das Regelelement (3) und/oder die beiden Kammern (5, 8) rotationssymmetrisch ausgebildet sind.

4. Regelventilelement gemäß einem der vorangehenden Ansprüche, **dadurch gekennzeichnet, dass**
- das Stellelement (2), vorzugsweise an seinem dem Regelelement (3) abgewandten Bereich, von einer Membran (110) aktuiert ist bzw. mit dieser verbunden ist, die bzw. deren eine Fläche gemeinsam mit dem Ventilgehäuse (1) eine erste Regelkammer (101) begrenzt, und
- die zentrale Durchführung (4) zur ersten Regelkammer (101) geführt ist.

5. Regelventilelement nach Anspruch 4, **dadurch gekennzeichnet, dass** das Stellelement (2) den Teil der zentralen Durchführung (4) zwischen der zentralen Kammer (5) und der ersten Regelkammer (101) durchsetzt.

6. Regelventilelement gemäß Anspruch 4 oder 5, **gekennzeichnet durch** eine zweite Regelkammer (102), die von dem Ventilgehäuse (1) sowie von der anderen Fläche der Membran (110) begrenzt ist und einen externen Druckregelanschluss (105) aufweist.

7. Regelventilelement gemäß einem der vorangehenden Ansprüche, **dadurch gekennzeichnet, dass** die periphere Durchführung (7) des Regelelements (3) eine Anzahl von im Regelelement (3) verlaufenden Kanälen (71) aufweist, die durch den Körper des Regelelements (3) von der peripheren Kammer (8) in eine von der Endplatte (12) gebildete und/oder zwischen der Endplatte (12) und dem Regelelement (3) liegende Ausnehmung (72, 73) führen und in einem vorgegebenen Abstand (A) von der Ausmündung (47) der zentralen Durchführung (4) in der Ausmündung (77) im Umfangsbereich der Endplatte (12) ausmünden.

8. Regelventilelement gemäß einem der Ansprüche 4 bis 7, **dadurch gekennzeichnet, dass** die druckwirksame Fläche der Stirnfläche (31) des Regelelements (3) im Bereich zwischen 25% und 50% der druckwirksamen Fläche der Membran (110) liegt.

9. Regelventilelement gemäß einem der Ansprüche 2 bis 8, **dadurch gekennzeichnet, dass** die von der Endplatte (12) umfasste druckwirksame Fläche zwischen 60% und 80% der druckwirksamen Fläche der Stirnfläche (31) des Regelelements (3) liegt.

10. Regelventilelement gemäß einem der vorangehenden Ansprüche, **dadurch gekennzeichnet, dass** der druckwirksame Flächenanteil der Innenoberfläche der peripheren Kammer (8), der der Stirnfläche (31) des Regelelements (3) zugewandt ist, zwischen 85% und 115% der druckwirksamen Fläche der Stirnfläche (31) des Regelelements (3) liegt.

11. Ventilvorrichtung mit einem Zufluss (501), einem Abfluss (502) und einem dazwischen ausgebildeten Ventilsitz (503), **gekennzeichnet durch** ein Regelventilelement (10) gemäß einem der vorangehenden Ansprüche, wobei das Regelelement (10) gegenüber dem Ventilsitz angeordnet ist und den Ventilsitz (503) verschließt bzw. den Durchflussquerschitt Abstand zwischen dem Regelelement (3) und dem Ventilsitz (503) verstellt.

## Claims

1. A control valve element including a valve chamber (1) through which extends a displaceable setting element (2) carrying a cylindrical piston-shaped control element (3) at its end remote from said valve chamber (1), a valve seat being closable by said control element (3),
wherein
- said control element (3) has at least one central passage (4), particularly extending in the area of the axis (X) of the control element (3), at least through parts of which said setting element (2) extends;
- a central chamber (5) immediately enclosing said setting element (2) being formed between the valve chamber (1) and the control element (3), one end of the central passage (4) leading into said chamber (5);
- said central chamber (5) is bordered by a partial area of the back face of the control element (3) opposite the front face, said partial area being located at the interior side and close to the central passage (4);
- a peripheral chamber (8) being formed between the valve chamber (1) and the back face of the control element (3), said peripheral chamber being sealed in relation to the central chamber (5) and separated therefrom, optionally enclosing said central chamber (5); and
- said control element (3) having at least one peripheral passage (7) spaced apart from the central passage (4), one end of said peripheral passage leading into the peripheral chamber (8) and the other one leading onto the front face (31) of the control element (3) exposed to the incident flow,
**characterized in**
- **that** the central passage (4) has a central discharge hole (47), particularly in the area of the axis (X), on the front face (31) of the control element (3) which is exposed to the flow of the fluid to be controlled flowing through the valve seat;
- **that** the discharge hole (77) of the peripheral passage (7) and the discharge hole (47) of the central passage (4) are located within the peripheral area of the exposed front face (31) which is in sealing contact with the valve seat; and
- **that** the discharge hole (77) of the peripheral passage (7) is spaced apart by a predetermined radial distance (A) from the discharge hole (47) of the central passage (4) on the exposed front face (31).

2. The control valve element according to claim 1, **characterized in that** an end plate (12) carried by the setting element (2) and/or by the control element (3) is located in front of the front face of the control element (3) and **in that** the peripheral passage (7) is partially formed by a channel which is particularly formed by recesses (72, 73) in the end plate (12) disposed between the control element (3) and the end plate (12).

3. The control valve element according to any one of the preceding claims, **characterized in that** the valve chamber (1), the setting element (2), the control element (3), and/or the two chambers (5, 8) are rotationally symmetrical.

4. The control valve element according to any one of the preceding claims, **characterized in**
- **that** the setting element (2) is actuated by or connected to a membrane (110), preferably in the area turned away from the control element (3), said membrane or one surface of said membrane bordering a first control chamber (101) together with the valve chamber (1), and
- **that** the central passage (4) leads to the first control chamber (101).

5. The control valve element according to claim 4, **characterized in that** the setting element (2) extends through that section of the central passage (4) between the central chamber (5) and the first control chamber (101).

6. The control valve element according to claim 4 or 5, **characterized by** a second control chamber (102) bordered by the valve chamber (1) and the other surface of the membrane (110) and having an external pressure control terminal (105).

7. The control valve element according to any one of the preceding claims, **characterized in that** the peripheral passage (7) of the control element (3) has a number of channels (71) extending through said control element (3), leading through the body of the control element (3) from the peripheral chamber (8) into a recess (72, 73) formed by the end plate (12) and/or located between the end plate (12) and the control element (3) and leading into the discharge hole (77) in the circumferential area of the end plate (12) at a predetermined distance (A) from the discharge hole (47) of the central passage (4).

8. The control valve element according to any one of the claims 4 to 7, **characterized in that** the pressure-active surface area of the front face (31) of the control element (3) corresponds to between 25 and 50 % of the pressure-active surface area of the membrane (110).

9. The control valve element according to any one of the claims 2 to 8, **characterized in that** the pressure-active surface area comprised by the end plate (12) corresponds to between 60 and 80 % of the surface area of the pressure-active front face (31) of the control element (3).

10. The control valve element according to any one of the preceding claims, **characterized in that** the pressure-active surface area of the interior surface of the peripheral chamber (8) and which faces the front face (31) of the control element (3) corresponds to between 85 and 115 % of the pressure-active surface area of the front face (31) of the control element (3).

11. A valve device having an inlet (501), an outlet (502), and a valve seat (503) formed in between, **characterized by** a control valve element (10) according to any one of the preceding claims, said control valve element (10) being disposed opposite the valve seat and closes the valve seat (503) or changes the flow section formed by the distance between the control element (3) and the valve seat (503).

## Revendications

1. Élément de soupape de réglage avec une cage de soupape (1) à travers de laquelle s'étend un élément actionneur (2) portant à son bout éloigné de la cage de soupape (1) un élément de réglage (3) cylindrique sous forme de piston pour obturer un siège de soupape,
- ledit élément de réglage (3) ayant au moins un passage central (4), notamment près de l'axe (X) dudit élément de réglage (3), l'élément actionneur (2) s'étendant au moins à travers des parties dudit passage;
- une chambre centrale (5) immédiatement autour de l'élément actionneur (2) étant formée entre la cage de soupape (1) et l'élément de réglage (3), un bout du passage central (4) aboutissant à cette chambre centrale;
- ladite chambre centrale (5) étant bordée par une partie intérieure et près du passage central (4) de la face arrière de l'élément de réglage (3) opposée à la face avant;
- une chambre périphérique (8) étant formée entre la cage de soupape (1) et la face arrière de l'élément de réglage (3), ladite chambre périphérique étant rendue étanche par rapport à la chambre centrale (5) et étant séparée de celle-ci, facultativement entourant ladite chambre centrale (5); et
- l'élément de réglage (3) ayant au moins un passage périphérique (7) écarté du passage central (4), un bout dudit passage périphérique aboutissant à la chambre périphérique (8), l'autre bout aboutissant à la face avant (31) de l'élément de réglage (3) affectée par l'écoulement,
**caractérisé en ce**
- **que** le passage central (4) a un orifice de décharge (47), notamment près de l'axe (X), sur la face avant (31) de l'élément de réglage (3) affectée par le fluide à régler qui s'écoule à travers le siège de soupape;
- **que** l'orifice de décharge (77) du passage périphérique (7) et l'orifice de décharge (47) du passage central (4) sont aménagés dans la région périphérique de la face avant (31) affectée par l'écoulement qui est contacte avec et rend étanche le siège de soupape; et
- **que** l'orifice de décharge (77) du passage périphérique (7) est écarté d'une distance radiale prédéterminée (A) de l'orifice de décharge (47) du passage central (4) de la face avant (31) affectée par l'écoulement.

2. Élément de soupape de réglage selon la revendication 1, **caractérisé en ce qu'**une plaque terminale (12) supportée par l'élément actionneur (2) et/ou par l'élément de réglage (3) est aménagée devant la face avant de l'élément de réglage (3) et **en ce que** le passage périphérique (7) est partiellement formé par un conduit qui est notamment formé par des creux (72, 73) dans la plaque terminale (12) disposés entre l'élément de réglage (3) et la plaque terminale (12).

3. Élément de soupape de réglage selon l'une des revendications précédentes, **caractérisé en ce que** la cage de soupape (1), l'élément actionneur (2), l'élément de réglage (3) et/ou les deux chambres (5, 8) sont symétriques en rotation.

4. Élément de soupape de réglage selon l'une des revendications précédentes, **caractérisé en ce**
- **que** l'élément actionneur (2) est actionné par ou relié à une membrane (110), de préférence dans la région détournée de l'élément de réglage (3), ladite membrane ou une surface de ladite membrane bordant une première chambre de réglage (101) avec la cage de soupape (1) et
- **que** le passage central (4) aboutit à la première chambre de réglage (101).

5. Élément de soupape de réglage selon la revendication 4, **caractérisé en ce que** l'élément actionneur (2) s'étend à travers la partie du passage central (4) entre la chambre centrale (5) et la première chambre de réglage (101).

6. Élément de soupape de réglage selon la revendication 4 ou 5, **caractérisé par** une deuxième chambre de réglage (102) bordée par la cage de soupape (1) et l'autre surface de la membrane (110) et ayant un raccord extérieur de réglage de pression.

7. Élément de soupape de réglage selon l'une des revendications précédentes, **caractérisé en ce que** le passage périphérique (7) de l'élément de réglage (3) a un nombre de conduits (71) qui s'étendent à travers ledit élément de réglage (3), menant à travers le corps dudit élément de réglage (3) de la chambre périphérique (8) à un creux (72, 73) formé par la plaque terminale (12) et/ou aménagé entre la plaque terminale (12) et l'élément de réglage (3) et aboutissant à l'orifice de décharge (77) dans la région circonférentielle de la plaque terminale (12) à une distance (A) prédéterminée de l'orifice de décharge (47) du passage central (4).

8. Élément de soupape de réglage selon l'une des revendications 4 à 7, **caractérisé en ce que** la surface de la face avant (31) de l'élément de réglage (3) affectée par pression correspond à entre 25 et 50 % de la surface de la membrane (110) affectée par pression.

9. Élément de soupape de réglage selon l'une des revendications 2 à 8, **caractérisé en ce que** la surface comprise par la plaque terminale (12) et affectée par pression correspond à entre 60 et 80 % de la surface de la face avant (31) de l'élément de réglage (3) affectée par pression.

10. Élément de soupape de réglage selon l'une des revendications précédentes, **caractérisé en ce que** la surface de la face intérieure de la chambre périphérique (8) affectée par pression et tournée vers la face avant (31) de l'élément de réglage (3) correspond à entre 85 et 115 % de la surface de la face avant (31) de l'élément de réglage (3) affectée par pression.

11. Dispositif de soupape avec une prise (501), une sortie (502) et un siège de soupape (503) entre les deux, **caractérisé par** l'élément de soupape (10) selon l'une des revendications précédentes, ledit élément de soupape (10) étant aménagé en face du siège de soupape et obturant le siège de soupape (503) ou changeant la section d'écoulement entre l'élément de réglage (3) et le siège de soupape (503).
